# EUROPEAN PATENT APPLICATION

(11) **EP 3 584 921 A1**
(43) Date of publication of application: **25.12.2019**
(21) Application number: 19178549.2
(22) Date of filing: 05.06.2019
(51) Int. Cl.: H02M 7/00, H01H 9/00, H01R 13/05, H01R 13/514, H01R 13/627, H02K 5/22

(54) **A LOW AMPERAGE ELECTRIC SWITCH FOR ELECTRICAL TRANSFORMERS**

(30) Priority: 18.06.2018 IT 201800006432
(71) Applicant: Elettro Maule S.r.l., 36054 Montebello Vicentino (VI) (IT)
(72) Inventor: MAULE, Renato, 36054 Montebello Vicentino (IT); MAULE, Mirco, 36054 Montebello Vicentino (IT)
(74) Representative: Trentin, Michele

(57) **Abstract**

A low amperage electric switch for electrical transformers comprising: a plurality of electrical contact pins (**2**); a support bar (**3**) provided with a plurality of through holes (**4**) able to stably receive the electrical contact pins (**2**). The latter are made by moulding an electrically conductive material and comprise a body (**15**) having a mainly longitudinal development having a first closed end (**16**) and a second open end (**17**) for access to an inner space constituting a blind hole (**18**).

## Description

### Field of application

The present invention is generally applicable to the technical field of electrical transformers and relates to a low amperage electric switch for electrical transformers.

More in detail, the present invention finds application as a low amperage electric switch for oil bath transformers.

### Background art

In the field of electrical transformers, the use of voltage switches is known. The realization of the latter is particularly delicate in the case of transformers for high electrical potentials as they can cause electrical discharges between the poles of the switches. The case of oil bath transformers is one of these. They are applied to power lines crossed by high electrical potentials.

The switches used in transformers operating with high electrical potentials typically have a plurality of electrical contact pins, usually made of copper or a copper alloy, arranged aligned on a support bar. The movement of the bar causes the modification of the electrical contacts by switching the lines of the transformer between them. Given the magnitude of the potentials involved, to avoid the possible generation of discharges, the pins must be made with precision, with valuable materials and arranged at a predefined distance to avoid electrical discharges between adjacent pins.

The size of the pins, obviously, is related to the magnitude of the electric current that is expected to cross them. Among these high potential electrical transformers there are transformers that are affected by different values of electric current. In particular, there are transformers for which the electric switch is typically subjected to low amperages. In these cases, the pins are typically of small sizes to reduce both the quantity of material used and, above all, the overall dimensions of the switch.

According to the known art, such pins are typically obtained at the lathe by obtaining a single hollow cylindrical drawn piece of conductive material which is cut to size, headed and bevelled.

Such embodiment entails as a first obvious drawback the creation of a significant quantity of discard material since the cutting to size typically does not coincide, as a multiple, with the length of the drawn piece produced. This would be unnecessarily expensive per se because the material being discarded has already been processed, but since it is a valuable material, the production cost excess becomes even more significant.

Furthermore, the pins are subjected to high inrush currents well above the amperage that the currents have during use. Being hollow cylindrical elements, it is evident that they have resistance limits of these inrush currents. This often forces to oversize the pins used compared to the currents normally provided in use due to the possible high inrush currents.

Also, during the installation step, the known pins have some drawbacks. In particular, the installer must insert the electric cable therein and fix it in place. Such operation is difficult because, since the pins are hollow cylinders, the electric cable can emerge from the opposite side, forcing the operator to do additional work to cut the exceeding cable. Even keeping the cable in place before locking it is not easy.

### Presentation of the invention

The object of the present invention is to overcome at least partially the drawbacks mentioned above by providing a low amperage electric switch which allows to reduce production costs by reducing the cost of making the pins is composed with.

In particular, an object of the present invention is that the pins are made by generating a null or in any case limited material discard compared to what happens in the known art.

Another object is to provide a low amperage electric switch whose pins, with the same sizes, can withstand currents with a higher amperage compared to known pins.

A further object of the present invention is to provide a low amperage electric switch whose wiring is simpler compared to known equivalent switches.

Said objects, as well as others which will become clearer in the following, are achieved by a low amperage electric switch according to the claims that follows which are to be considered as an integral part of the present patent.

In particular, it comprises a plurality of electrical contact pins inserted in respective through holes of a support bar.

According to an aspect of the invention, the pins are made by moulding of an electrically conductive material.

Advantageously, therefore, they immediately have the desired size, optimizing the use of material and substantially eliminating production discards. The cost of producing the pins is then advantageously optimized.

According to another aspect of the invention, the pins comprise a body with a mainly longitudinal development, typically but not necessarily cylindrical, having a first closed end. The second end is open so as to give access to an inner space constituting a blind hole.

Advantageously, therefore, the closure of one end helps in positioning the wiring, facilitating the work of the user.

Still advantageously, the risk that the wiring is poorly executed with copper o similar parts exiting from the opposite end is avoided. The latter, moreover, would be particularly dangerous since it is a switch for oil bath transformers.

According to a further aspect of the invention, the first closed end is constituted by a full end portion of the body with a mainly longitudinal development. This advantageously allows to increase the nominal current of the same pin with the same sizes. It follows that, given the same working conditions, i.e. current values which cross the pin under working conditions, the pin of the invention is advantageously able to more easily high amperage inrush currents.

### Brief description of the drawings

Further features and advantages of the invention will become more evident in light of the detailed description of a preferred but not exclusive embodiment of a low amperage electric switch according to the invention, illustrated by way of non-limiting example with the aid of the accompanying drawings wherein:
- FIG. 1 shows an axonometric view of the switch according to the invention;
- FIGS. 2 to 6 represent details of the switch of FIG. 1.

### Detailed description of some preferred exemplary embodiments

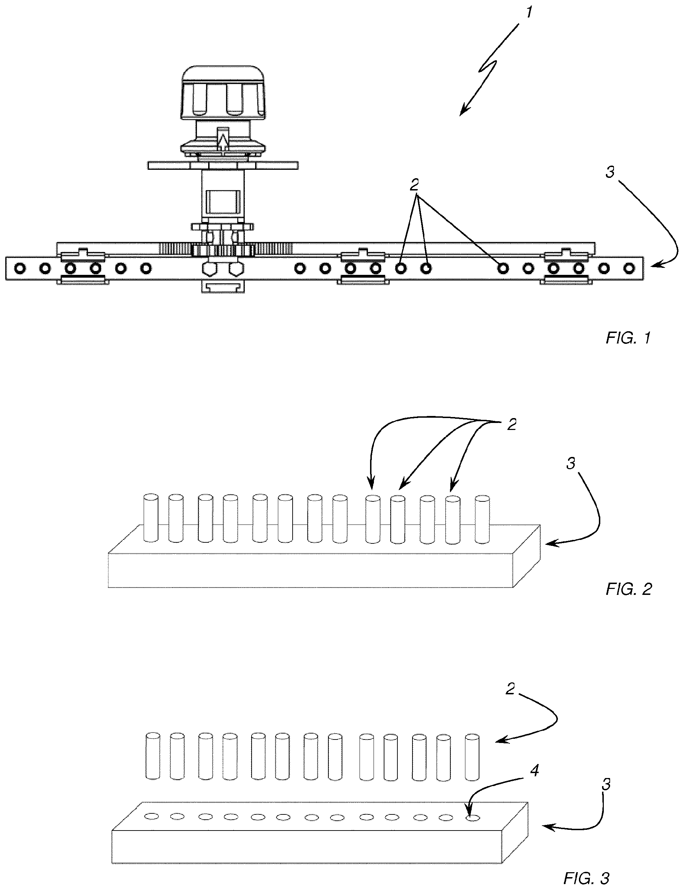

With reference to the mentioned figures, and in particular to figs. 1 and 2, a low amperage electric switch 1 is described. The latter finds application in the oil bath electrical transformers.

In this sense, as is the case of equivalent known switches, the switch **1** of the invention comprises a plurality of pins **2** for electrical contact and a support bar **3**. The latter is provided, as shown in fig. 3, with a plurality of through holes **4** whose function is to receive and stably hold the pins **2**.

Given their function, the pins **2** are made of electrically conductive material typically but not necessarily comprising copper. They then typically have a cylindrical shape, although such detail should not be considered limiting for the present invention since their shaping can be any as long as according to the electrical powers they have to withstand.

According to an aspect of the invention, the pins **2** are first of all made by moulding the aforementioned electrically conductive material.

Such aspect entails the first advantage of simplifying the productivity of the pin **2**. In particular, still advantageously, with this mode the pins **2** are custom made eliminating the presence of production discard material. Therefore, the production cost is also optimized.

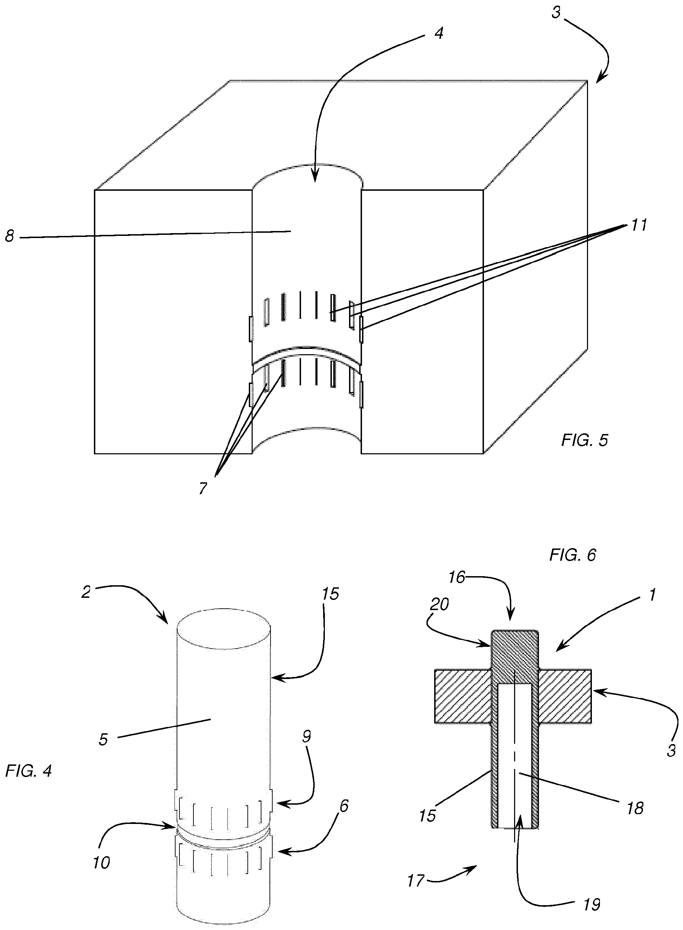

Typically, as can be seen in figs. 4 and 5, on the side surface **5** of the pin **2** there is a first projection **6**. The latter is inserted into a respective first recess **7** on the inner surface **8** of the through holes **4** of the bar **3** so as to remain stably coupled thereto.

According to a further aspect of the invention, there is also a second projection **9** substantially aligned with the first projection **6** according to the longitudinal development axis of the pin **2** and spaced therefrom, along the same longitudinal development axis, by a predefined distance. In this way an intermediate channel **10** for retaining the pin **2** in the bar **3** is defined. In this sense, the second projection **9** is able to be inserted in a respective second recess **11** in the inner surface **8** of the first through holes **4** of the bar **3**.

With the conformations described above, a stable constraint of the pins **2** in the bar **3** is made.

This embodiment should not be considered as limiting for the invention. In the figures it can be observed, in fact, that each projection **6**, **9** consists of an annular knurled band on the side surface **5** of the pins **2**. This allows the pins **2** to be constrained to the bar **3** preventing even relative rotations thereof. However, the projections and the relative recesses can be of any number whatsoever and shaped in any way whatsoever. In particular, the second projections and recesses, according to a variant embodiment, are absent.

According to further embodiments, not represented in the figures, the projections can be located on the pins externally to the bar to be in contrast with the latter and in any case prevent them from being removed.

In any case, according to an aspect of the invention, one or more of these projections **6**, **9** can advantageously be obtained by moulding exactly like the rest of the pin **2**. It is clear that this allows, both in the production of the pin **2** and in the assembly of the switch **1** to simplify the operations with significant savings also in economic terms.

According to another aspect of the invention, the pins **2** have a body **15** with a mainly longitudinal development and, according the above, typically, although not necessarily, they are cylindrical. This body **15** has, as can be seen in fig. 6, a first closed end **16** and a second open end **17**. The latter gives access to an inner space constituting a blind hole **18**.

Accordingly, the pin **2** of the switch of the invention is configured to receive the end of an electrical wiring cable exactly like the known pins. Such end of the cable must in fact be inserted into the blind hole **18** through the opening **19** of the second end **17** of the body **15**.

Advantageously, however, the closure of the first end **16** prevents the cable from exiting if the insertion is excessive.

Again advantageously, therefore, the work of the user who performs the wiring is facilitated. Still advantageously, there is no risk that, following the exiting of the cable from the first end **16**, the installer is forced to intervene to remove the protruding part.

Still advantageously, the impossibility of exiting of the cable eliminates the risks of malfunctioning of the switch **1** due to incorrect wiring.

According to a further aspect of the invention, the first closed end **16** is constituted by a full end portion **20** of the body **15**.

Advantageously, therefore, it is possible to increase the nominal current of the pin **2** for the same sizes. Still advantageously, as a consequence, under the same working conditions, i.e. current values which cross the pin **2**, the latter manages to withstand higher amperage inrush currents more easily compared to the equivalent known pins of the same sizes.

It should in fact be considered that the switch **1** of the invention is for applications with low amperage values. In this sense, the known pins, which as mentioned are hollow cylindrical, have particularly limited diameters and limited thicknesses in section. As suitable for the current values that cross them in use, similarly this makes them unsuitable for the inrush current values they can be crossed with. For these reasons, as stated above, oversized pins are used, thus increasing the overall dimensions and costs of the switch. In the case of the invention, on the other hand, the switch **1** comprises pins **2** of advantageously optimal size.

As regards the blind hole **18**, according to the embodiment described, it consists of a cylindrical cavity between the second end **17** of the body **15** and the full portion **20**.

In light of the foregoing, it is understood that the low amperage electric switch of the invention achieves all the prefixed objects.

In particular, it allows to reduce production costs by reducing the cost of making the pins it is composed with.

The latter, moreover, withstand higher amperage inrush currents compared to the known pins of equal sizes.

Moreover, the low amperage electric switch of the invention allows a simpler and more immediate wiring than compared to the known equivalent switches.

The invention might be subject to many changes and variants, which are all included in the appended claims. Moreover, all the details may furthermore be replaced by other technically equivalent elements, and the materials may be different depending on the needs, without departing from the protection scope of the invention defined by the appended claims.

## Claims

1. A low amperage electric switch for electrical transformers comprising:
- a plurality of electrical contact pins (**2**);
- at least one support bar (**3**) provided with a plurality of through holes (**4**) adapted to stably receive said electrical contact pins (**2**),
**characterized in that** said pins (**2**) are made by moulding an electrically conductive material and comprise a body (**15**) with a mainly longitudinal development having a first closed end (**16**) and a second open end (**17**) for access to an inner space constituting a blind hole (**18**).

2. Switch according to claim 1, **characterized in** comprising, on the side surface (**5**), at least a first projection (**6**) which is able to be inserted in a respective first recess (**7**) on the inner surface (**8**) of said through holes (**4**).

3. Switch according to claim 1 or 2, **characterized in** comprising, on said side surface (**5**) of said pin (**2**), at least one second projection (**9**) substantially aligned with said first projection (**6**) according to the longitudinal development axis of said pin (**2**) and spaced therefrom, along said longitudinal development axis, by a predefined distance to define an intermediate channel (**10**) for retaining said pin (**2**) in said bar (**3**), said second protrusion (**9**) being able to be inserted in a respective second recess (**11**) in said inner surface (**8**) of said through holes (**4**).

4. Switch according to claim 3, **characterized in that** each of said projections (**6**, **9**) consists of an annular knurled band on said side surface (**5**) of said pins (**2**).

5. Switch according to any one of claims 3 or 4, **characterized in that** at least one of said projections (**6**, **9**) is made by said moulding of said electrically conductive material.

6. Switch according to any one of the preceding claims, **characterized in that** said first closed end (**16**) is constituted by a full end portion (**20**) of said body (**15**) having a mainly longitudinal development.

7. Switch according to claim 6, **characterized in that** said blind hole (**18**) forms a cylindrical cavity between said second end (**17**) and said full portion (**20**).

8. Switch according to any one of the preceding claims, **characterized in that** said longitudinal body (**15**) is cylindrical shaped.
